# EUROPÄISCHE PATENTSCHRIFT

(11) **EP 4 490 834 B1**
(45) Veröffentlichungstag und Bekanntmachung des Hinweises auf die Patenterteilung: **17.12.2025**
(21) Anmeldenummer: 23706599.0
(22) Anmeldetag: 21.02.2023
(51) Int. Cl.: H02K 11/25, H02K 3/52

(54) **ELEKTROMOTOR MIT STATORWICKLUNG, SENSOR UND ISOLIERRING**
ELECTRIC MOTOR WITH STATOR WINDING, SENSOR AND INSULATING RING
MOTEUR ELECTRIQUE À ENROULEMENT DE STATOR, CAPTEUR ET BAGUE ISOLANTE

(30) Priorität: 08.03.2022 DE 102022000801
(43) Veröffentlichungstag der Anmeldung: 15.01.2025
(73) Patentinhaber: SEW-EURODRIVE GmbH & Co. KG, 76646 Bruchsal (DE)
(72) Erfinder: HETTEL, Domenik, 76474 Au am Rhein (DE); ZELLER, Peter, 68723 Oftersheim (DE); GÜNNEL, Gabriel, 09212 Limbach-Oberfrohna (DE); SCHMITT, Klaus-Dieter, 77743 Neuried (DE); ZÜLCH, Michael, 76689 Karlsdorf-Neuthard (DE); HEER, Markus, 79689 Maulburg (DE)
(74) Vertreter: Tüngler, Eberhard
(86) Internationale Anmeldenummer: PCT/EP2023/054304
(87) Internationale Veröffentlichungsnummer: WO 2023/169814

(56) Entgegenhaltungen:
- EP-A1- 1 727 261
- EP-A1- 2 306 622
- DE-A1- 102013 003 052
- DE-A1- 102020 107 860

## Beschreibung

Die Erfindung betrifft einen Elektromotor mit Statorwicklung, Sensor und Isolierring.

Es ist allgemein bekannt, dass ein Elektromotor eine in einem Statorblechpaket aufgenommene Statorwicklung aufweist und einen zum Statorblechpaket drehbar gelagert Rotor.

Aus der DE 10 2018 119 831 A1 ist eine elektrische Maschine bekannt.

Aus der DE 10 2019 206 641 A1 ist ein Stator eines Elektromotors bekannt.

Aus der DE 10 2016 213 710 A1 ist ein Stator für eine elektrische Maschine bekannt.

Aus der DE 10 2013 003 024 A1 ist ein Elektromotor einer Fahrzeugkomponente bekannt.

**Aus der** DE 10 2013 003 052 A1 **ist als nächstliegender Stand der Technik ein Elektromotor mit Statorwicklung bekannt.**

**Aus der** DE 10 2020 107860 A1 **ist eine Vorrichtung zur Anbringung eines Temperatursensors an einer elektrischen Maschine bekannt.**

**Aus der** EP 1 727 261 A1 **ist ein Stator für einen Elektromotor bekannt.**

**Aus der** EP 2 306 622 A1 **ist eine Statoranordnung für einen Elektromotor bekannt.**

Der Erfindung liegt daher die Aufgabe zugrunde, einen Elektromotor weiterzubilden, wobei eine einfache und sichere Montage und ein einfacher und sicherer Betrieb ermöglicht wird, Erfindungsgemäß wird die Aufgabe bei dem Elektromotor nach den in Anspruch 1 angegebenen Merkmalen gelöst.

Wichtige Merkmale der Erfindung bei dem Elektromotor sind, dass der Elektromotor mit Statorwicklung, Sensor und Isolierring ausgeführt ist,
insbesondere wobei der Sensor ein Temperatursensor ist, insbesondere ein Pt1000,
wobei am Isolierring ein Hebelbereich ausgeformt ist, in welchem der Sensor aufgenommen ist,
wobei der Sensor vom Hebelbereich elastisch an die Statorwicklung angedrückt ist.

Von Vorteil ist dabei, dass mittels Betätigung des Hebelbereichs ein Wegkippen des Sensors derart bewirkbar ist, dass ein einfaches ungestörtes, also sicheres, Aufschieben des Isolierrings ermöglicht ist, bevor die Vergussmasse zugeführt wird. Nach dem Aufschieben des Isolierrings ist der Hebelbereich freigebbar, so dass der Sensor vom Hebelbereich elastisch vorgespannt angedrückt wird an die Statorwicklung. Danach ist die Vergussmasse zuführbar.

Bei einer vorteilhaften Ausgestaltung ist der Isolierring mit einem Verschaltungsring verbunden ist, insbesondere klipsverbunden,
wobei der Verschaltungsring Blechteile aufweist, die in einem Träger, insbesondere Kunststoffträger des Verschaltungsrings aufgenommen sind,
wobei die Blechteile mit Enden der Wicklungsdrähte der Statorwicklung elektrisch verbunden sind. Von Vorteil ist dabei, dass der Isolierring über den Verschaltungsring gehalten ist, der wiederum über den Wicklungsdraht gehalten ist. Somit ist ein Halten des Isolierrings über den Verschaltungsring sicher ermöglicht. Der Isolierring umgibt den Verschaltungsring radial und trägt somit zu einer Erhöhung der Isolationsfestigkeit bei. Denn zwischen den Strom führenden Blechteilen des Verschaltungsrings und dem metallischen Statorgehäuse ist in radialer Richtung der Isolierring angeordnet.

Bei einer vorteilhaften Ausgestaltung hält die Wicklungsdrähte, insbesondere die Statorwicklung, den Verschaltungsring,
insbesondere wobei zusätzlich Vergussmasse den Verschaltungsring umgibt und sowohl den Isolierring als auch die Statorwicklung berührt. Von Vorteil ist dabei, dass der Verschaltungsring axial von dem Statorblechpaket, welches die Statorwicklung aufnimmt, beabstandet ist. Mittels der Vergussmasse ist eine besonders hohe Sicherheit erreichbar.

Bei einer vorteilhaften Ausgestaltung sind am Isolierring nach radial innen hervorstehende Verbindungsbereiche ausgeformt, welche mit dem Verschaltungsring klipsverbunden sind. Von Vorteil ist dabei, dass eine einfache schnelle und sichere Verbindung ermöglicht ist, indem der Isolierring auf den Verschaltungsring aufsteckbar ist und formschlüssig verbindbar ist.

**Erfindungsgemäß** sind am Isolierring zwei nach radial innen hervorstehende Vorsprünge ausgeformt, die In Umfangsrichtung voneinander beabstandet sind,
wobei der Hebelbereich über einen ersten Verdrehbereich mit einem ersten der beiden Vorsprünge verbunden ist,
insbesondere wobei der Hebelbereich auf seiner vom ersten Verdrehbereich in Umfangsrichtung abgewandten Seite über einen zweiten Verdrehbereich mit dem zweiten der beiden Vorsprünge verbunden ist,
insbesondere wobei die beiden Verdrehbereiche mit einer geringeren Materialstärke ausgebildet sind als der Hebelbereich und als der jeweilige Vorsprung. Von Vorteil ist dabei, dass die Verdrehbereiche in einfach Weise als verdünnte Materialbereiche ausführbar sind. Die Vorsprünge sind am Isolierring angeformt, wobei der Hebelbereich über die verdünnten Materialbereiche, also Verdrehbereiche, verbunden ist mit den Vorsprüngen.

Bei einer vorteilhaften Ausgestaltung ist der Sensor in einen Schlauch eingesteckt, dessen erstes Schlauchende stoffschlüssig verschlossen ist, insbesondere zusammengedrückt verschweißt ist,
wobei das erste Schlauchende in eine am Hebelbereich angeordnete, durch den Hebelbereich durchgehende Ausnehmung eingesteckt ist. Von Vorteil ist dabei, dass ein einfaches sicheres Halten des Sensors erreichbar ist.

Bei einer vorteilhaften Ausgestaltung ist mit dem Sensor eine elektrische Anschlussleitung verbunden, welche aus dem anderen Schlauchende des Schlauchs herausragt,
wobei zwei in Umfangsrichtung voneinander beabstandete, nach radial innen hervorragende Hakenbereiche die Anschlussleitung führen und/oder halten. Von Vorteil ist dabei, dass der Schlauch den Sensor und zumindest einen Teil der Anschlussleitung umgibt. Somit ist eine Schutzfunktion erreicht und die Sicherheit verbessert.

Bei einer vorteilhaften Ausgestaltung ist am Isolierring ein erster, nach radial innen hervorstehender Hakenbereich ausgeformt, welcher die Anschlussleitung des Sensors führt und/oder hält. Von Vorteil ist dabei, dass die Anschlussleitung in einfacher Weise sicher gehalten ist.

Bei einer vorteilhaften Ausgestaltung ist am Isolierring ein zweiter, nach radial innen hervorstehender Hakenbereich ausgeformt, welcher die Anschlussleitung des Sensors führt und/oder hält,
wobei der erste Hakenbereich vom zweiten Hakenbereich in Umfangsrichtung voneinander beabstandet ist,
insbesondere wobei der erste Hakenbereich einen kleineren Abstand zum Hebelbereich aufweist als der zweite Hakenbereich,
insbesondere wobei der erste Hakenbereich ein Nasenbereich, insbesondere ein die Anschlussleitung radial begrenzende Nasenbereich, aufweist, welche zur Statorwicklung hingerichtet ist,
insbesondere wobei der zweite Hakenbereich einen Nasenbereich aufweist, welche von der Statorwicklung weg gerichtet ist. Von Vorteil ist dabei, dass durch die Beiden entgegengesetzt ausgeführten Haken ein sicheres Halten der Anschlussleitungen erreichbar und somit die Sicherheit verbessert ist.

Bei einer vorteilhaften Ausgestaltung ist der Verschaltungsring mit den Blechteilen derart geeignet ausgeführt, dass die Statorwicklung in Sternschaltung oder Dreieckschaltung verschaltet ist. Von Vorteil ist dabei, dass im Verschaltungsring die jeweilige Verschaltung festgelegt ist. Somit sind Verdrahtungsfehler verringerbar und dadurch ist die Sicherheit erhöht.

Bei einer vorteilhaften Ausgestaltung sind am Verschaltungsring Anschlüsse für elektrische Versorgungsleitungen angeordnet,
wobei der Isolierring eine Doppelwand aufweist, welche in Umfangsrichtung einen Bereich überdeckt, in welchem der von den Anschlüssen in Umfangsrichtung überdeckte Bereich enthalten ist. Von Vorteil ist dabei, dass der Verschaltungsring an seinen Anschlüssen verbindbar ist mit den Versorgungsleitungen und von den mit den Blechteilen verbundenen Wicklungsdrahtenden mechanisch gehalten ist, wobei gleichzeitig elektrischer Kontakt zur Versorgung der Statorwicklung erreicht ist.

Bei einer vorteilhaften Ausgestaltung ist die axiale Richtung parallel zur Richtung der Drehachse des Rotors des Elektromotors ausgerichtet,
wobei der von den Blechteilen und/oder den Anschlüssen in axialer Richtung überdeckte Bereich von dem von der Doppelwand in axialer Richtung überdeckten Bereich umfasst ist. Von Vorteil ist dabei, dass der Anschlussbereich mit erhöhter Sicherheit durch die Doppelwand aus elektrisch isolationsfestem Material des Isolierrings nach radial außen hin geschützt ist.

Bei einer vorteilhaften Ausgestaltung steht der Hebelbereich auf der von der Statorwicklung axial abgewandten Seite des Isolierrings hervor. Von Vorteil ist dabei, dass eine einfache Betätigung des Hebelbereichs während des Aufsteckens des Isolierrings auf den Verschaltungsring ausführbar ist, um den Sensor während des Aufschiebens von der Statorwicklung zu beabstanden, insbesondere als Schutz vor Verletzung des Sensors.

Zusätzlich ist der Sensor durch den übergestülpten Schlauch geschützt, der wiederum selbst aus elektrische isolationsfestem Material gefertigt ist.

Bei einer vorteilhaften Ausgestaltung ist die Statorwicklung in einem Statorblechpaket aufgenommen,
insbesondere wobei das Statorblechpaket in ein Statorgehäuse des Elektromotors eingeschoben ist,
insbesondere wobei der Isolierring radial beabstandet ist vom Statorgehäuse oder wobei der Isolierring spielbehaftet in das Statorgehäuse eingesteckt ist. Von Vorteil ist dabei, dass der Isolierring über den Verschaltungsring und die Wicklungsdrähte beziehungsweise die Statorwicklung am Statorblechpaket befestigt ist und dieses Statorblechpaket in das Statorgehäuse einschiebbar ist, wobei mittels des Spiels eine Verletzung des Isolierrings vermieden wird. Abschließend ist der Verschaltungsring von Vergussmasse umgebbar, welche zumindest die Innenseite des Isolierrings berührt.

Bei einer vorteilhaften Ausgestaltung ist ein Rotor des Elektromotors mittels zumindest eines Lagers drehbar gelagert,
wobei das Lager im Statorgehäuse aufgenommen ist oder das Lager in einem mit dem Statorgehäuse verbundenen, mit dem Statorgehäuse verbundenen Lagerschild oder Lagerflansch aufgenommen ist. Von Vorteil ist dabei, dass der Elektromotor einfach herstellbar ist.

Weitere Vorteile ergeben sich aus den Unteransprüchen.

Die Erfindung wird nun anhand von schematischen Abbildungen näher erläutert:
In der Figur 1 ist der Stator eines erfindungsgemäßen Elektromotors in Schrägansicht dargestellt, wobei auf einer Statorwicklung ein Verschaltungsring und ein Isolierring vorgesehen sind.

In der Figur 2 ist im Gegensatz zur Figur 1 der Verschaltungsring ausgeblendet.

In der Figur 3 ist ein radial geschnittener Teilbereich dargestellt, in welchem ein Sensor 5 mit Schlauch vorgesehen ist.

In der Figur 4 ist eine Draufsicht in axialer Richtung zum Sensor 5 hin dargestellt.

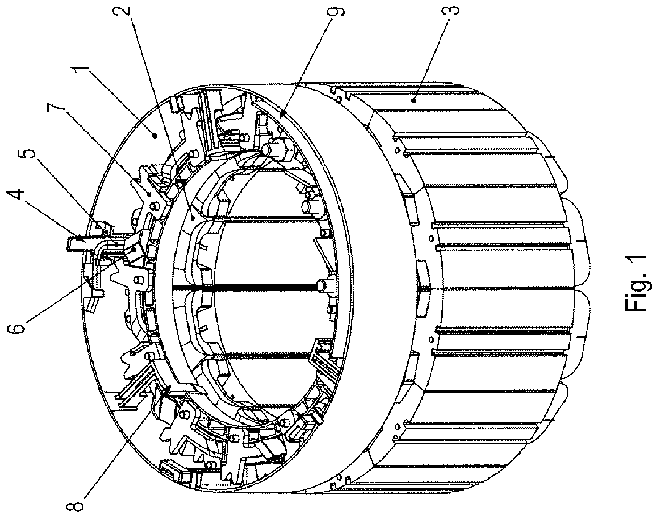

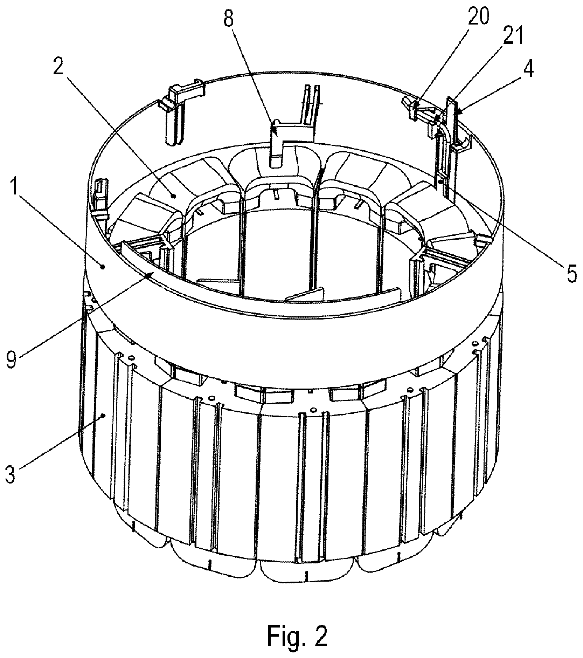

Wie in den Figuren 1 bis 4 dargestellt, weist der Stator ein Statorblechpaket 3 auf, in dem eine Statorwicklung 2 mit Wickelkopf aufgenommen ist. Der Wickelkopf ist dabei derjenige Bereich der Statorwicklung 2, welcher axial aus dem Statorblechpaket 3 hervorragt, insbesondere wobei die Wicklungsdrähte im Wickelkopf umgelenkt werden.

Die Wicklungsdrahtenden des Wicklungsdrahtes der Statorwicklung 2 stehen axial hervor und sind mit Blechteilen 7, insbesondere Kupferblechen, des Verschaltungsrings elektrisch verbunden. Außerdem ist der Verschaltungsring durch die Wicklungsdrahtenden gehalten.

Die Blechteile 7 sind in einem Kunststoffträger 6 aufgenommen, so dass der Verschaltungsring als Einheit bei der Montage auf die Wicklungsdrahtenden aufschiebbar ist.

Im Verschaltungsring wird die Statorwicklung als Sternschaltung oder als Dreieckschaltung verschaltet.

Ein Isolierring 1, der aus elektrisch isolationsfestem Material, insbesondere Kunststoff, gefertigt ist, ist koaxial zum Verschaltungsring ausgerichtet. Die Drehachse des in den Figuren nicht dargestellten Rotors des Elektromotors ist also koaxial zur Ringachse des Verschaltungsrings beziehungsweise des Isolierrings 1.

Der Isolierring 1 ist in axialer Richtung zum Verschaltungsring bei der Montage aufgeschoben und mit am Isolierring 1 ausgeformten, nach radial innen hervorragenden Verbindungsbereichen 8 mit dem Verschaltungsring verbunden, insbesondere in den Verschaltungsring eingeklipst. Vorzugsweise ist am jeweiligen Verbindungsbereich 8 eine jeweilige Rastnase ausgebildet, mit der ein Verrasten des Isolierrings 1 am Verschaltungsring ermöglicht ist.

Der von den Blechteilen 7, insbesondere Kupferblechen, in axialer Richtung überdeckte Bereich ist von dem von dem Isolierring 1 in axialer Richtung überdeckten Bereich umfasst. Somit isoliert der Isolierring 1 die stromführenden Blechteile 7 vom Statorgehäuse 30, welches den Isolierring radial umgibt.

Insbesondere umgibt der Isolierring 1 die Blechteile 7 radial.

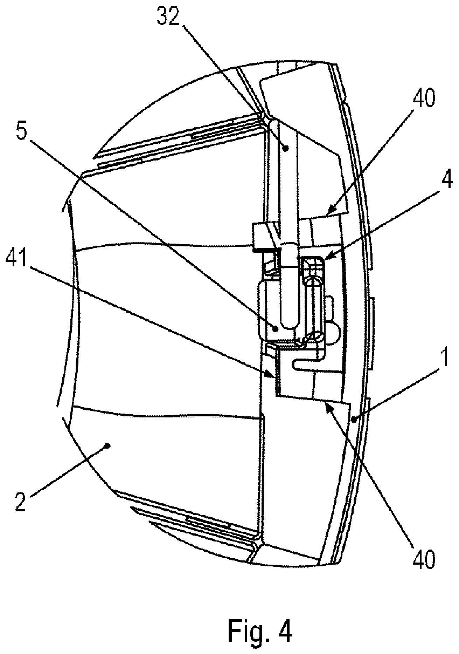

Wie in Figur 4 gezeigt, sind am Isolierring 1 nach radial innen gerichtete Vorsprünge 40 ausgeformt, die in Umfangsrichtung voneinander beabstandet sind. In Umfangsrichtung zwischen den beiden Vorsprüngen 40 ist ein Hebelbereich 4 des Isolierrings 1 ausgeformt, welcher über zwei Verdrehbereiche 41, die als Drehgelenke wirksam sind, mit den Vorsprüngen 40 verbunden ist.

Die Verdrehbereiche 41, der Hebelbereich 4 und die Vorsprünge 40 sind am Isolierring 1 einstückig, insbesondere einteilig, ausgeformt. Somit ist der Isolierring 1 vorzugsweise als Kunststoffspritzgussteil ausgeführt.

Der Hebelbereich 4 ragt von den Verdrehbereichen 41 sowohl in axialer Richtung als auch entgegengesetzt zur axialen Richtung vor.

Die Verdrehbereiche 41 sind im Vergleich zur Materialstärke der Vorsprünge 40 und/oder des Hebelbereichs 4 mit einer viel geringeren Materialstärke ausgeführt. Somit ist beim Schwenken des Hebelbereichs 4 jeder der beiden Verdrehbereiche elastisch tordiert und daher als Drehgelenk mit Rückstellkraft oder als Drehfeder wirksam. Bei der Montage wird derjenige Bereich des Hebelbereichs 4, welcher in den Figuren nach axial oben hervorragt nach radial innen gedrückt und somit der andere Endbereich des Hebelbereichs 4 von der Statorwicklung 2, insbesondere vom Wickelkopf, weggedrückt. Nach Loslassen des Hebelbereichs 4 schwenkt das Hebelbereich 4 zurück.

Das Statorgehäuse 30 nimmt das Statorblechpaket 3 auf, indem dieses in eine innenzylindrische Ausnehmung des Statorgehäuses 30 eingeschoben ist. Der Isolierring 1 ist in die Ausnehmung ebenfalls eingeschoben, wobei aber in axialer Richtung ein nicht verschwindender Abstand zwischen Statorblechpaket 3 und Isolierring 1 vorhanden ist.

Am Hebelbereich 4 ist eine Nut-artige Aufnahme für den Sensor 5 ausgeformt, welcher in einen Schlauch eingesteckt ist. Die als Anschlussleitung fungierende Sensorleitung 32 ragt durch den Schlauch zu einem ersten Ende des Schlauchs 5 heraus und ist durch zwei in Umfangsrichtung voneinander beabstandete, nach radial innen hervorragende Hakenbereiche 21 geführt und gehalten.

Das zweite Schlauchende des Schlauchs ist zusammengedrückt und verschweißt, insbesondere also zusammengedrückt und durch thermisches Erhitzen verschlossen. Dieses zweite Schlauchende ist durch eine durchgehende Ausnehmung, insbesondere durch ein Loch, gesteckt, wobei diese Ausnehmung am dem Statorblechpaket zugewandten Ende des Hebelbereichs 4 angeordnet ist. Insbesondere geht die Ausnehmung in axialer Richtung durch das Material des Hebelbereichs 4 hindurch. Auf diese Weise ist der Sensor 5 formschlüssig gehalten.

Die Hakenbereich 21 sind gegenläufig. Somit ist insbesondere ein erster der beiden Hakenbereiche 21, welcher näher am Sensor 5 angeordnet ist als der zweite der beiden Hakenbereiche 21, vom Statorblechpaket abgewandt ausgerichtet. Der zweite Hakenbereich 21 ist zum Statorblechpaket hingerichtet.

Insbesondere weist der erste Hakenbereich einen am Isolierring 1 ausgeformten nach radial innen hervorragenden Armbereich auf, an dessen radial innen liegendem Ende ein Nasenbereich vom Statorblechpaket 30 weg gerichtet in axialer Richtung hervorragt. Entsprechend weist der zweite Hakenbereich einen am Isolierring 1 ausgeformten nach radial innen hervorragenden zweiten Armbereich auf, an dessen radial innen liegendem Ende ein Nasenbereich zum Statorblechpaket 30 hin gerichtet in axialer Richtung hervorragt.

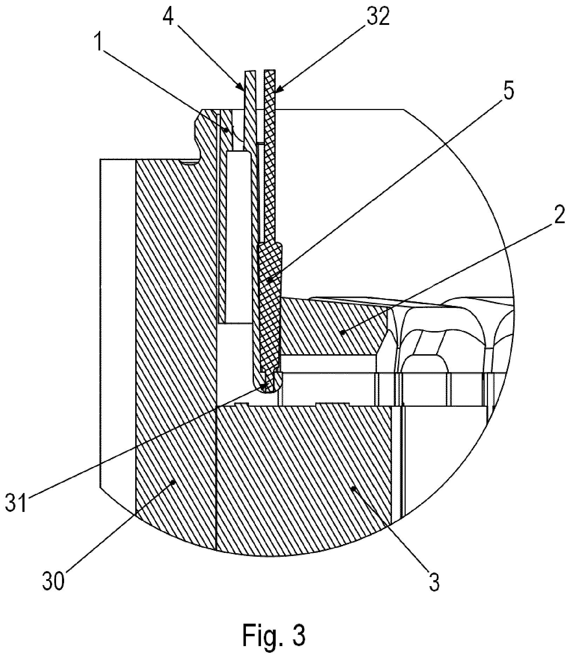

Nach dem Loslassen des Hebelbereichs 4 bei der Montage wird der Sensor 5 nach radial innen an die Statorwicklung 2, insbesondere an den aus dem Statorblechpaket 3 hervorragenden Wickelkopf angedrückt, wie in Figur 3 deutlich sichtbar.

Vorzugsweise wird der Verschaltungsring samt Isolierring mit Vergussmasse vergossen, wobei der Isolierring 1 nicht an seien radial äußeren Oberfläche, sondern nur an seiner radial inneren Oberfläche in Kontakt ist mit der Vergussmasse. Der Kunststoffträger 6 des Verschaltungsrings ist zusammen mit den Blechteilen 7 von der Vergussmasse umgossen.

Der vom Statorblechpaket 3 abgewandte Endbereich des Hebelbereichs 4 ragt aus dem restlichen Isolierring in axialer Richtung hervor.

Am Isolierring 1 ist eine Doppelwand 9 ausgeformt, welche in Umfangsrichtung denjenigen Bereich überdeckt, in welchem die Anschlüsse des Verschaltungsrings angeordnet sind, insbesondere welche mit Versorgungsleitungen zur Versorgung des Elektromotors verbindbar sind. Dabei ist die Doppelwand 9 vorzugsweise in radialer Richtung konstant vom radial äußeren Rand des Isolierrings 1 beabstandet, insbesondere also mit einem vom radial äußeren Rand des Isolierrings 1 konstanten Abstand ausgeführt.

Bei weiteren erfindungsgemäßen Ausführungsbeispielen wird der Kunststoffträger 6 zusammen mit dem Isolierring 1 einstückig, also einteilig, ausgeführt, insbesondere als Kunststoffspritzgussteil.

Bei weiteren erfindungsgemäßen Ausführungsbeispielen wird der vom Statorblechpaket 3 abgewandte Endbereich des Hebelbereichs 4 in axialer Richtung kürzer ausgeführt, so dass der Hebelbereich 4 nicht axial über den restlichen Isolierring 1 hervorragt. Insbesondere ist der Hebelbereich 4 auch als einseitiger Hebel, der nur zum Statorblechpaket axial hervorragt ausführbar. Bei der Montage wird dann der Sensor 5 nach radial außen gerichtet gedrückt und nach Einschieben oder während des Einschiebens freigegeben, so dass dann der Sensor 5 in Kontakt kommt mit der Statorwicklung 2, insbesondere dem Wickelkopf der Statorwicklung.

### Bezugszeichenliste

1 Isolierring
2 Statorwicklung, insbesondere Wicklungskopf
3 Statorblechpaket
4 Hebelbereich des Isolierrings 1
5 Sensor mit Schlauch
6 Kunststoffträger
7 Blechteil, insbesondere Kupferblech
8 Verbindungsbereich
9 Doppelwand
20 Hakenbereich
21 Hakenbereich
30 Statorgehäuse
31 Endbereich des Schlauchs
32 Sensorleitung
40 Vorsprung, insbesondere nach radial innengerichtet
41 Verdrehbereich, insbesondere als Drehgelenk wirksam

## Patentansprüche

1. Elektromotor mit Statorwicklung (2), Sensor (5) und Isolierring (1),
**wobei der Isolierring aus elektrisch isolationsfestem Material, insbesondere Kunststoff, gefertigt ist,**
**wobei der Isolierring stromführende Blechteile des Elektromotors vom Statorgehäuse des Elektromotors isoliert, welches den Isolierring radial umgibt,**
insbesondere wobei der Sensor ein Temperatursensor ist, insbesondere ein Pt1000,
**wobei** am Isolierring ein Hebelbereich (4) ausgeformt ist, in welchem der Sensor aufgenommen ist,
wobei der Sensor vom Hebelbereich elastisch an die Statorwicklung angedrückt ist,
**dadurch gekennzeichnet, dass**
**am Isolierring zwei nach radial innen hervorstehende Vorsprünge** (40) **ausgeformt sind, die In Umfangsrichtung voneinander beabstandet sind,**
**wobei der Hebelbereich** in Umfangsrichtung zwischen den beiden Vorsprüngen ausgeformt ist und **über einen ersten Verdrehbereich** (41) **mit einem ersten der beiden Vorsprünge verbunden ist.**

2. Elektromotor nach Anspruch 1,
**dadurch gekennzeichnet, dass**
der Isolierring mit einem Verschaltungsring verbunden ist, insbesondere klipsverbunden ist,
wobei der Verschaltungsring Blechteile aufweist, die in einem Träger, insbesondere Kunststoffträger des Verschaltungsrings aufgenommen sind,
wobei die Blechteile mit Enden der Wicklungsdrähte der Statorwicklung elektrisch verbunden sind.

3. Elektromotor nach **Anspruch 2,**
**dadurch gekennzeichnet, dass**
die Wicklungsdrähte, insbesondere die Statorwicklung, den Verschaltungsring hält,
insbesondere wobei zusätzlich Vergussmasse den Verschaltungsring umgibt und sowohl den Isolierring als auch die Statorwicklung berührt.

4. Elektromotor nach **Anspruch 2 oder 3,**
**dadurch gekennzeichnet, dass**
die Verbindungsbereiche 8 mit dem Verschaltungsring klipsverbunden sind.

5. Elektromotor nach einem der vorangegangenen Ansprüche,
**dadurch gekennzeichnet, dass**
**der Hebelbereich auf seiner vom ersten Verdrehbereich in Umfangsrichtung abgewandten Seite über einen zweiten Verdrehbereich mit dem zweiten der beiden Vorsprünge verbunden ist,**
**insbesondere wobei die beiden Verdrehbereiche mit einer geringeren Materialstärke ausgebildet sind als der Hebelbereich und als der jeweilige Vorsprung.**

6. Elektromotor nach einem der vorangegangenen Ansprüche,
**dadurch gekennzeichnet, dass**
der Sensor in einen Schlauch eingesteckt ist, dessen erstes Schlauchende stoffschlüssig verschlossen ist, insbesondere zusammengedrückt verschweißt ist,
wobei das erste Schlauchende in eine am Hebelbereich angeordnete, durch den Hebelbereich durchgehende Ausnehmung eingesteckt ist.

7. Elektromotor nach einem der vorangegangenen Ansprüche,
**dadurch gekennzeichnet, dass**
mit dem Sensor eine elektrische Anschlussleitung verbunden ist, welche aus dem anderen Schlauchende des Schlauchs herausragt,
wobei zwei in Umfangsrichtung voneinander beabstandete, nach radial innen hervorragende Hakenbereiche die Anschlussleitung führen und/oder halten.

8. Elektromotor nach einem der vorangegangenen Ansprüche,
**dadurch gekennzeichnet, dass**
am Isolierring ein erster, nach radial innen hervorstehender Hakenbereich ausgeformt ist, welcher die Anschlussleitung des Sensors führt und/oder hält.

9. Elektromotor nach einem der vorangegangenen Ansprüche,
**dadurch gekennzeichnet, dass**
am Isolierring ein zweiter, nach radial innen hervorstehender Hakenbereich ausgeformt ist, welcher die Anschlussleitung des Sensors führt und/oder hält,
wobei der erste Hakenbereich vom zweiten Hakenbereich in Umfangsrichtung voneinander beabstandet ist,
insbesondere wobei der erste Hakenbereich einen kleineren Abstand zum Hebelbereich aufweist als der zweite Hakenbereich, insbesondere wobei der erste Hakenbereich ein Nasenbereich, insbesondere ein die Anschlussleitung radial begrenzende Nasenbereich, aufweist, welche zur Statorwicklung hingerichtet ist,
insbesondere wobei der zweite Hakenbereich einen Nasenbereich aufweist, welche von der Statorwicklung weg gerichtet ist.

10. Elektromotor nach **Anspruch 2 und nach einem der anderen** vorangegangenen Ansprüche,
**dadurch gekennzeichnet, dass**
der Verschaltungsring mit den Blechteilen derart geeignet ausgeführt ist, dass die Statorwicklung in Sternschaltung oder Dreieckschaltung verschaltet ist.

11. Elektromotor nach **Anspruch 2 und nach einem der anderen** vorangegangenen Ansprüche,
**dadurch gekennzeichnet, dass**
am Verschaltungsring Anschlüsse für elektrische Versorgungsleitungen angeordnet sind, wobei der Isolierring eine Doppelwand aufweist, welche in Umfangsrichtung einen Bereich überdeckt, in welchem der von den Anschlüssen in Umfangsrichtung überdeckte Bereich enthalten ist.

12. **Elektromotor nach Anspruch 11,**
**dadurch gekennzeichnet, dass**
die axiale Richtung parallel zur Richtung der Drehachse des Rotors des Elektromotors ausgerichtet ist,
wobei der von den Blechteilen und/oder den Anschlüssen in axialer Richtung überdeckte Bereich von dem von der Doppelwand in axialer Richtung überdeckten Bereich umfasst ist.

13. Elektromotor nach einem der vorangegangenen Ansprüche,
**dadurch gekennzeichnet, dass**
der Hebelbereich auf der von der Statorwicklung axial abgewandten Seite des Isolierrings hervorsteht.

14. Elektromotor nach einem der vorangegangenen Ansprüche,
**dadurch gekennzeichnet, dass**
die Statorwicklung in einem Statorblechpaket aufgenommen ist,
insbesondere wobei das Statorblechpaket in ein Statorgehäuse des Elektromotors eingeschoben ist,
insbesondere wobei der Isolierring radial beabstandet ist vom Statorgehäuse oder wobei der Isolierring spielbehaftet in das Statorgehäuse eingesteckt ist.

15. Elektromotor nach einem der vorangegangenen Ansprüche,
**dadurch gekennzeichnet, dass**
ein Rotor des Elektromotors mittels zumindest eines Lagers drehbar gelagert ist,
wobei das Lager im Statorgehäuse aufgenommen ist oder das Lager in einem mit dem Statorgehäuse verbundenen, mit dem Statorgehäuse verbundenen Lagerschild oder Lagerflansch aufgenommen ist.

## Claims

1. Electric motor comprising a stator winding (2), a sensor (5) and an insulating ring (1), the insulating ring being made of highly electrically insulating material, in particular plastics material,
the insulating ring insulating current-carrying sheet metal parts of the electric motor from the stator casing of the electric motor, which stator casing radially encloses the insulating ring, the sensor in particular being a temperature sensor, in particular a Pt1000,
a lever region (4) in which the sensor is housed being formed on the insulating ring,
the sensor being resiliently pressed onto the stator winding by the lever region,
**characterised in that**
two radially inwardly protruding projections (40) that are spaced apart from one another in the circumferential direction are formed on the insulating ring,
the lever region being formed between the two projections in the circumferential direction and being connected to a first of the two projections by means of a first torsion region (41).

2. Electric motor according to claim 1,
**characterised in that**
the insulating ring is connected, in particular clip-connected, to an interconnection ring,
the interconnection ring having sheet metal parts that are housed in a support, in particular a plastics support of the interconnection ring,
the sheet metal parts being electrically connected to ends of the winding wires of the stator winding.

3. Electric motor according to claim 2,
**characterised in that**
the winding wires, in particular the stator winding, hold the interconnection ring,
potting compound in particular additionally enclosing the interconnection ring and being in contact with both the insulating ring and the stator winding.

4. Electric motor according to claim 2 or claim 3,
**characterised in that**
the connection regions (8) are clip-connected to the interconnection ring.

5. Electric motor according to any of the preceding claims,
**characterised in that**
the lever region is connected, on its side facing away from the first torsion region in the circumferential direction, to the second of the two projections by means of a second torsion region,
the two torsion regions in particular being formed having a lower material thickness than the lever region and the associated projection.

6. Electric motor according to any of the preceding claims,
**characterised in that**
the sensor is inserted into a tube, the first tube end of which is sealed in an integrally bonded manner, in particular is fused together in a compressed manner,
the first tube end being inserted into a through-opening that is arranged on the lever region and passes through the lever region.

7. Electric motor according to any of the preceding claims,
**characterised in that**
an electrical connection line is connected to the sensor and projects out of the other tube end of the tube,
the connection line being guided and/or held by two radially inwardly projecting hook regions that are spaced apart from one another in the circumferential direction.

8. Electric motor according to any of the preceding claims,
**characterised in that**
a first radially inwardly protruding hook region is formed on the insulating ring and guides and/or holds the connection line of the sensor.

9. Electric motor according to any of the preceding claims,
**characterised in that**
a second radially inwardly protruding hook region is formed on the insulating ring and guides and/or holds the connection line of the sensor,
the first hook region and the second hook region being spaced apart from one another in the circumferential direction,
the first hook region in particular being at less of a distance from the lever region than the second hook region, the first hook region in particular having a lug region pointing towards the stator winding, in particular a lug region that radially delimits the connection line,
the second hook region in particular having a lug region pointing away from the stator winding.

10. Electric motor according to claim 2 and according to any of the other preceding claims,
**characterised in that**
the interconnection ring having the sheet metal parts is suitably configured such that the stator winding is wired in a Y configuration or a delta configuration.

11. Electric motor according to claim 2 and according to any of the other preceding claims,
**characterised in that**
terminals for electrical supply lines are arranged on the interconnection ring,
the insulating ring having a double wall which, in the circumferential direction, covers a region that includes the region covered by the terminals in the circumferential direction.

12. Electric motor according to claim 11,
**characterised in that**
the axial direction is oriented in parallel with the direction of the axis of rotation of the rotor of the electric motor,
the region covered by the sheet metal parts and/or the terminals in the axial direction being encompassed by the region covered by the double wall in the axial direction.

13. Electric motor according to any of the preceding claims,
**characterised in that**
the lever region protrudes on the side of the insulating ring facing axially away from the stator winding.

14. Electric motor according to any of the preceding claims,
**characterised in that**
the stator winding is housed in a stator laminated core,
the stator laminated core in particular being pushed into a stator casing of the electric motor, the insulating ring in particular being radially spaced apart from the stator casing, or the insulating ring being inserted into the stator casing with play.

15. Electric motor according to any of the preceding claims,
**characterised in that**
a rotor of the electric motor is rotatably mounted by means of at least one bearing,
the bearing being housed in the stator casing, or the bearing being housed in an end shield or bearing flange connected to the stator casing.

## Revendications

1. Moteur électrique avec enroulement de stator (2), capteur (5) et bague isolante (1), la bague isolante étant fabriquée en un matériau électriquement isolant, en particulier en plastique,
la bague isolante isolant des pièces en tôle conductrices de courant du moteur électrique par rapport au carter de stator du moteur électrique qui entoure radialement la bague isolante,
le capteur étant en particulier un capteur de température, en particulier un Pt1000,
une région de levier (4), au sein de laquelle est accueilli le capteur, étant formée au niveau de la bague isolante,
le capteur de la région de levier étant pressé de manière élastique contre l'enroulement de stator,
**caractérisé en ce que**
deux saillies (40) faisant saillie radialement vers l'intérieur et espacées l'une de l'autre dans le sens circonférentiel sont formées au niveau de la bague isolante,
la région de levier étant formée dans la direction circonférentielle entre les deux saillies et étant reliée à une première des deux saillies par une première région de rotation (41).

2. Moteur électrique selon la revendication 1,
**caractérisé en ce que**
la bague isolante est reliée, en particulier est reliée par clips, à une bague d'interconnexion,
la bague d'interconnexion présentant des pièces en tôle qui sont accueillies dans un support, en particulier un support en plastique de la bague d'interconnexion,
les pièces en tôle étant reliées électriquement aux extrémités des fils d'enroulement de l'enroulement de stator.

3. Moteur électrique selon la revendication 2,
**caractérisé en ce que**
les fils d'enroulement, en particulier l'enroulement de stator, retient la bague d'interconnexion,
une masse de scellement entourant en particulier de manière supplémentaire la bague d'interconnexion et étant en contact à la fois avec la bague isolante et avec l'enroulement de stator.

4. Moteur électrique selon la revendication 2 ou 3,
**caractérisé en ce que**
les régions de connexion (8) sont reliées par clips à la bague d'interconnexion.

5. Moteur électrique selon l'une quelconque des revendications précédentes,
**caractérisé en ce que**
la région de levier est reliée, sur son côté opposé à la première région de rotation dans la direction circonférentielle, à la deuxième des deux saillies par une deuxième région de rotation,
les deux régions de rotation étant en particulier réalisées avec une épaisseur de matériau plus faible que celle de la région de levier et de la saillie respective.

6. Moteur électrique selon l'une quelconque des revendications précédentes,
**caractérisé en ce que**
le capteur est inséré dans un tuyau dont la première extrémité de tuyau est fermée par complémentarité de matière, en particulier est soudée par compression,
la première extrémité de tuyau étant insérée dans un évidement agencé dans la région de levier et traversant la région de levier.

7. Moteur électrique selon l'une quelconque des revendications précédentes,
**caractérisé en ce que**
un câble de raccordement électrique qui dépasse de l'autre extrémité du tuyau est connecté au capteur,
la conduite de raccordement étant guidée et/ou retenue par deux régions de crochet espacées l'une de l'autre dans la direction circonférentielle et faisant saillie radialement vers l'intérieur.

8. Moteur électrique selon l'une quelconque des revendications précédentes,
**caractérisé en ce que**
une première région de crochet faisant saillie radialement vers l'intérieur et guidant et/ou retenant le câble de raccordement du capteur est formée au niveau de la bague isolante.

9. Moteur électrique selon l'une quelconque des revendications précédentes,
**caractérisé en ce que**
une seconde région de crochet faisant saillie radialement vers l'intérieur et guidant et/ou retenant le câble de raccordement du capteur est formée au niveau de la bague isolante,
la première région de crochet étant espacée de la deuxième région de crochet dans la direction circonférentielle,
la première région de crochet présentant en particulier un espacement par rapport à la région de levier qui est inférieur à celui de la deuxième région de crochet, la première région de crochet présentant en particulier une région de nez, en particulier une région de nez délimitant radialement le câble de raccordement, qui est dirigée vers l'enroulement de stator,
la deuxième région de crochet présentant en particulier une région de nez qui est dirigée de manière à s'éloigner de l'enroulement de stator.

10. Moteur électrique selon la revendication 2 et selon l'une quelconque des autres revendications précédentes,
**caractérisé en ce que**
la bague d'interconnexion avec les pièces en tôle est réalisée de manière appropriée pour que l'enroulement de stator soit connecté en étoile ou en triangle.

11. Moteur électrique selon la revendication 2 et selon l'une quelconque des autres revendications précédentes,
**caractérisé en ce que**
des raccords destinés aux lignes d'alimentation électrique sont agencés au niveau de la bague d'interconnexion,
la bague isolante présentant une double paroi qui recouvre dans la direction circonférentielle une région contenant la région recouverte dans la direction circonférentielle par les raccords.

12. Moteur électrique selon la revendication 11,
**caractérisé en ce que**
la direction axiale est parallèle à la direction de l'axe de rotation du rotor du moteur électrique,
la région recouverte dans la direction axiale par les pièces en tôle et/ou les raccords étant comprise dans la région recouverte dans la direction axiale par la double paroi.

13. Moteur électrique selon l'une quelconque des revendications précédentes,
**caractérisé en ce que**
la région de levier fait saillie sur le côté de la bague isolante qui est axialement opposé à l'enroulement de stator.

14. Moteur électrique selon l'une quelconque des revendications précédentes,
**caractérisé en ce que**
l'enroulement de stator est accueilli dans un feuilletage de tôles de stator,
le feuilletage de tôles de stator étant en particulier inséré dans un carter de stator du moteur électrique,
la bague isolante étant en particulier espacée radialement par rapport au carter de stator ou la bague isolante étant en particulier enfichée avec jeu dans le carter de stator.

15. Moteur électrique selon l'une quelconque des revendications précédentes,
**caractérisé en ce que**
un rotor du moteur électrique est monté rotatif au moyen d'au moins un palier,
le palier étant accueilli dans le carter de stator ou le palier étant accueilli dans un flasque de palier ou une bride de palier relié(e) au carter de stator.
